# EUROPÄISCHE PATENTANMELDUNG

(11) **EP 0 927 660 A2**
(43) Veröffentlichungstag der Anmeldung: **07.07.1999**
(21) Anmeldenummer: 99100028.2
(22) Anmeldetag: 04.01.1999
(51) Int. Cl.: B60N 3/14

(54) **Zigarettenanzünder-Stecker**

(30) Priorität: 03.01.1998 DE 19800129; 07.05.1998 DE 29808230 U
(71) Anmelder: Dipl.-Ing. Henryk Bury GmbH, 32584 Löhne (DE)
(72) Erfinder: Bury, Henryk, Dipl.-Ing., 32584 Löhne (DE)
(74) Vertreter: TER MEER STEINMEISTER & PARTNER GbR

(57) **Zusammenfassung**

Ein Zigarettenanzünder-Stecker für Zigarettenanzünder in Fahrzeugen besteht aus zwei schwenkbar miteinander verbundenen Abschnitten, von denen einer in eine Zigarettenanzünder-Buchse einschiebbar ist, und einer Spreizeinrichtung, die durch Schwenkung des zweiten Abschnitts gegen den ersten Abschnitt zur Sicherung in der Buchse spreizbar ist. Gemäß einer ersten Ausführungsform der Erfindung wird durch Schwenkung des zweiten Abschnitts (12) ein innerhalb des ersten Abschnitts (10) liegender Spreiznocken (46) gedreht, gegen den von zwei gegenüberliegenden Seiten spreizbare Klemmbacken (22,24) anliegen. Gemäß einer anderen Ausführungsform weist der erste, in die Zigarettenanzünder-Buchse einschiebbare Abschnitt zwei hintereinanderliegende, axial zueinander bewegliche Teilabschnitte auf, zwischen denen sich ein Ring aus Gummi befindet, der sich durch axiales Zusammenspannen der Teilabschnitte zusammenpressen und damit spreizen läßt.

## Beschreibung

Die Erfindung betrifft einen Zigarettenanzünder-Stecker, bestehend aus zwei schwenkbar miteinander verbundenen Abschnitten, mit einer Spreizeinrichtung zur Sicherung des Steckers in der Buchse eines Zigarettenanzünders.

Zigarettenanzünder in Fahrzeugen bieten die Möglichkeit, elektrische Geräte an den Batteriestrom des Fahrzeugs anzuschließen. Diese Möglichkeit wird heute vor allem genutzt für Mobiltelefone und deren Zubehör, insbesondere Ladegeräte.

Ein Stecker dieser Art ist aus der DE 296 21 796 U1 bekannt, der aus zwei gegeneinander verdrehbaren Abschnitten besteht. Im übrigen sind aus dieser Druckschrift zwei Klemmbacken bekannt, die die Form von durch Federwirkung leicht gespreizten Drahtbügeln aufweisen.

Wegen der Erschütterungen, die während der Fahrt des Fahrzeugs auftreten, können sich herkömmliche Stecker während der Fahrt leicht lösen und damit den elektrischen Kontakt verlieren.

Daher gibt es Stecker, bei denen die Klemmbacken in der Buchse zur Verriegelung gezielt auseinandergedrückt werden können. Bei einer bekannten Lösung werden die Klemmbacken dadurch gespreizt, daß der zentrale Plus-Pol des Steckers beim Einschieben in die Buchse entgegen seiner federnden Abstützung zurückgeschoben wird und dadurch die Klemmbacken mit Hilfe von entsprechenden Kurvenbahnen auseinanderdrückt. Das Lösen erfolgt in diesem Falle durch Druck auf einen Auslöseknopf an der Außenseite des Steckers. Ein anderer bekannter Stecker weist zwei teleskopisch gegeneinander verschiebbare Abschnitte auf, durch deren gegenseitige Verschiebung beim Auftreten von Gegendruck in der Buchse die Klemmbacken gespreizt werden.

In anderem Zusammenhang zeigt die US-PS 5 190 466 einen verriegelbaren Stecker, bei dem eine Verriegelungszunge durch Drehung eines Schlüssels, der in das Steckergehäuse eintritt, seitlich aus der Steckerzunge ausgefahren und im Inneren der Buchse verriegelt werden kann.

Die bekannten Stecker ermöglichen zwar eine zuverlässige Verriegelung in der Buchse des Zigarettenanzünders. Alle bekannten Stecker und insbesondere diejenigen mit integriertem Verriegelungsmechanismus haben jedoch den Nachteil, daß sie gerade und verhältnismäßig weit aus dem Armaturenbrett herausragen. Sie können daher bei der Betätigung des Getriebe-Schalthebels oder verschiedener Schalter für die Bedienung des Fahrzeugs störend wirken.

Der Erfindung liegt daher die Aufgabe zugrunde einen Zigarettenanzünder-Stecker der eingangs genannten Art zu schaffen, der eine zuverlässige und einfache Verriegelung In der Buchse des Zigarettenanzünders ermöglicht.

Diese Aufgabe wird erfindungsgemäß bei einem Stecker der eingangs genannten Art dadurch gelöst, daß an der Achse des hinteren Abschnitts innerhalb des vorderen Abschnitts ein mit der Schwenkung des hinteren Abschnitts drehbarer Spreiznocken angebracht ist, gegen den die Klemmbacken von gegenüberliegenden Seiten anliegen.

Wenn bei Benutzung eines derartigen Steckers der vordere Abschnitt in die Buchse des Zigarettennanzünders eingeschoben ist, kann der hintere Abschnitt in bezug auf den vorderen Abschnitt abgeklappt werden. Dabei dreht sich der Spreiznocken innerhalb des vorderen Abschnitts, so daß die Klemmbacken auseinandergedrückt werden und den vorderen Abschnitt in der Buchse veriegeln. Wenn der hintere Abschnitt wieder in die gestreckte Stellung in bezug auf den vorderen Abschnitt zurückgeführt wird, löst sich die Klemmverbindung. Die Betätigung ist somit sehr einfach. Da der vordere Abschnitt in jeder beliebigen Winkelstellung in die Buchse eingeschoben werden kann, kann auch der hintere Abschnitt nach jeder gewünschten Seite, also nicht nur nach unten, abgeklappt werden und damit in eine Stellung gebracht werden, in der er die Bedienung des Fahrzeugs nicht behindert.

Vorzugsweise weisen die beiden Abschnitte im wesentlichen zylindrische Gehäuse auf, und einer der Abschnitte weist an seinem dem anderen Abschnitt zugewandten Ende an gegenüberliegenden Randbereichen zwei vorspringende, parallele Zungen auf, die den entsprechenden Endbereich des anderen Abschnitts von beiden Seiten her übergreifen. Die Schwenkachse erstreckt sich in diesem Falle durch die beiden Zungen und den zwischen diesen liegenden Endbereich des anderen Abschnitts. Vorzugsweise befinden sich die Zungen am vorderen Ende des hinteren Abschnitts.

Alternativ können die beiden Abschnitte an den einander zugewandten Enden an einer Seite ausgespart und seitlich so gegeneinander gelegt werden, daß die beiden Abschnitte im wesentlichen miteinander fluchten.

Damit der vordere Abschnitt möglichst kurz gehalten werden kann, befindet sich die Elektronik des Steckers vorzugsweise in dem hinteren Abschnitt. Dieser kann zur Vergrößerung des Innenraums quer zur Schwenkrichtung elliptisch verbreitert sein. Andererseits kann der hintere Endbereich des vorderen Abschnitts, gegen den die beiden Zungen anliegen, in Richtung der Schwenkachse eine verringerte Breite aufweisen, so daß sich die Zungen glatt in das Profil des vorderen Abschnitts einfügen.

Die Klemmbacken werden zweckmäßigerweise gebildet durch steife Blechstreifen, die an ihrem vorderen Ende fest eingespannt sind, einen abgekröpften Mittelabschnitt aufweisen, der aus einem Fenster des vorderen Stecker-Abschnitts nach außen austritt, und mit dem hinteren Ende gegen den Spreiznocken anliegen. Auf diese Weise drückt die Drehung des Spreiznockens den mittleren Abschnitt aus dem Fenster hinaus.

Zum Festlegen des hinteren Abschnitts in der abgeklappten Stellung ist vorzugsweise ein Rastnocken vorgesehen der durch Fingerdruck gelöst werden kann und in den hinteren Abschnitt zurückgeschwenkt werden soll.

Die gestellte Aufgabe wird bei einer anderen Ausführungsform der Erfindung dadurch gelöst, daß der Stecker zwei hintereinanderliegende` einen Zwischenraum bildende, In Axialrichtung relativ zueinander bewegliche Steckerabschnitte umfaßt, und daß ein Ring aus elastischem Material zwischen den Steckerabschnitten angeordnet Ist, der durch axiales Zusammenspannen der Steckerabschnitte radial spreizbar ist.

Ein elastischer Ring dieser Art kann aus Gummi oder einem geeigneten Kunststoff bestehen. Beim axialen Zusammendrücken der beiden Steckerabschnitte wird der Ring durch die entstehende Quetschwirkung nach allen Richtung radial aus dem Zwischenraum zwischen den Steckerabschnitten nach außen herausgequetscht. Der Außendurchmesser des Ringes nimmt damit zu, so daß sich der Ring fest innerhalb der Buchse verspannen kann.

Die Wirksamkeit dieser Verspannung ist unabhängig von den konstruktiven Einzelheiten in der Innengestaltung der Buchse. Weichelastische Materialien die zur Herstellung des Ringes in Frage kommen, besitzen im allgemeinen einen hohen Reibwert, so daß neben einer möglichen formschlüssigen Verriegelung eine gute kraftschlüssige Verriegelung gewährleistet ist.

Der vordere Steckerabschnitt ist auf seiner Rückseite vorzugsweise durch einen koaxialen Schaft verringerten Durchmessers verlängert, der sich durch das Innere des hinteren Steckerabschnitts erstreckt. Daher können die beiden Steckerabschnitte durch geeignete Kraftanwendung im Bereich des hinteren Endes des hinteren Steckerabschnitts axial zusammengespannt werden.

So ist beispielsweise das rückwärtige Ende des Schafts mit einem schwenkbaren Spannhebel verbunden, der sich am rückwärtigen Ende des hinteren Steckerabschnitts abstützt und bei Schwenkung bestrebt ist, den Schaft aus dem hinteren Ende des hinteren Steckerabschnitts herauszuziehen und die beiden Steckerabschnitte damit axial zusammenzuspannen. Der Spannhebel kann sowohl am rückwärtigen Ende des Schafts als auch im rückwärtigen Endbereich des hinteren Steckerabschnitts schwenkbar gelagert sein und sich beispielsweise über eine Nockenfläche an dem jeweils anderen Teil so abstützen, daß bei Schwenkung des Spannhebels ein axiales Zusammenspannen der Steckerabschnitte erfolgt.

Entsprechend einer bevorzugten Ausführungsform kann der Spannhebel die Form eines der Steckerabschnitte nach rückwärts verlängernden, im wesentlichen zylindrischen Handgriffteils aufweisen, das schwenkbar am rückwärtigen Ende des Schafts angebracht ist und sich über eine Nockenfläche im rückwärtigen Endbereich des hinteren Steckerteils abstützt. Auch dieses Handgriffteil kann alternativ schwenkbar am hinteren Steckerabschnitt gelagert sein und sich am Schaft mit einer Nockenfläche so abstützen, daß der Schaft bei Schwenkung des Handgriffteils zurückgezogen wird.

Im folgenden werden bevorzugte Ausführungsbeispiele der Erfindung anhand der beigefügten Zeichnung näher erläutert.
- Fig. 1: ist eine Seitenansicht eines erfindungsgemäßen Steckers;
- Fig. 2: zeigt eine entsprechende Draufsicht;
- Fig. 3: entspricht Fig. 1, zeigt den Stecker jedoch in der abgeknickten Stellung;
- Fig. 4: ist ein senkrechter Längsschnitt durch den Stecker;
- Fig. 5: ist ein waagerechter Längsschnitt durch den Stecker;
- Fig. 6: zeigt einen Querschnitt durch den Stecker im Bereich der Schwenkachse.
- Fig. 7: ist ein schematischer Längsschnitt durch einen erfindungsgemäßen Zigarettenanzünder-Stecker gemäß einer anderen Ausführungsform;
- Fig. 8: zeigt einen weiteren Längsschnitt senkrecht zur Zeichenebene in Fig. 7;
- Fig. 9: entspricht Fig. 7, zeigt den Zigarettenanzünder-Stecker jedoch in der gespannten Stellung;
- Fig. 10: ist ein Längsschnitt durch eine andere Ausführungsform des erfindungsgemäßen Steckers;
- Fig. 11: zeigt den Stecker der Fig. 10 in der gespannten Stellung;
- Fig. 12 und 13: zeigen den Stecker gemäß Fig. 10 und 11 mit einer zusätzlichen Rasteinrichtung zur Festlegung in der abgeknickten Stellung.

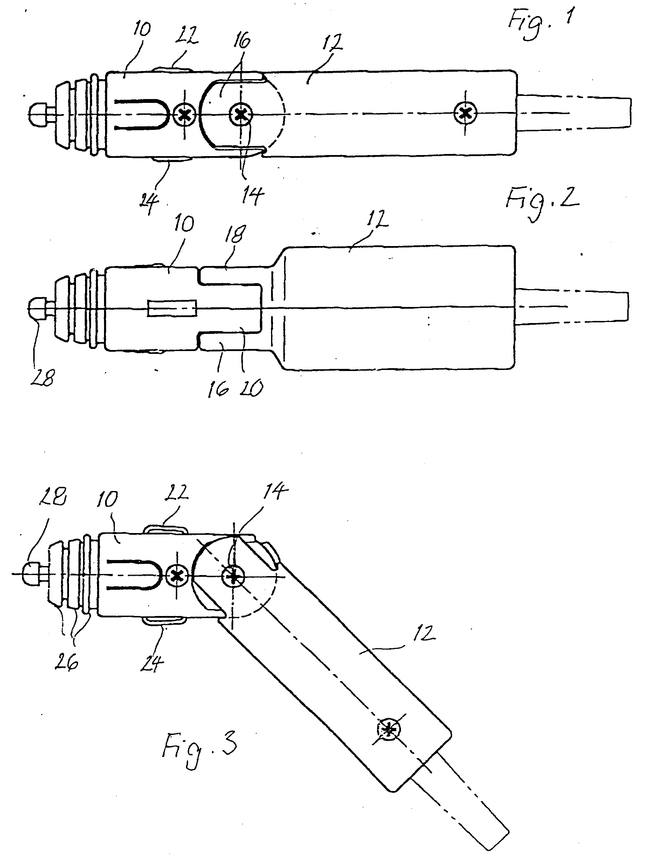

Ein erfindungsgemäßer Stecker besteht gemäß Fig. 1 bis 3 aus einem kürzeren vorderen Abschnitt 10 und einem längeren hinteren Abschnitt 12. Beide Abschnitte weisen im wesentlichen zylindrische Kunststoffgehäuse auf. Die beiden Abschnitte 10 und 12 sind durch eine Schwenkachse 14 schwenkbar verbunden. Die Schwenkachse 14 durchläuft zwei parallele, nach vorne vorspringende Zungen 16,18, die sich von zwei gegenüberliegenden Seiten gegen einen hinteren Endbereich 20 anlegen. Auf diese Weise fügen sich die Zungen 16,18 glatt in das Querschnittsprofil des vorderen Abschnitts 10 ein. Auf der oberen und unteren Seite gemäß Fig. 1 und 3 treten aus nicht dargestellten Fenstern des vorderen Abschnitts Klemmbacken 22,24 aus, die durch Abknicken des hinteren Abschnitts 12 nach außen gedrückt werden, wie ein Vergleich von Fig. 1 und 3 zeigt.

Der vordere Abschnitt 10 weist im vorderen Ende, wie bei Steckern dieser Art üblich, eine Anzahl von Rippen auf. Aus dem vorderen Ende des vorderen Abschnitts 10 tritt im übrigen aus dessen Zentrum ein federnd abgestützter Plus-Pol 28 aus, der beim Einschieben in eine Buchse eines Zigarettenanzünders zurückgedrückt wird und damit mit Federdruck gegen den entsprechenden Kontakt der Buchse anliegt.

Der hintere Abschnitt 12 kann aus zwei Schalen zusammengesetzt und durch die Schwenkachse 18 einerseits sowie eine weitere Schraube 30 zusammengehalten werden. Ebenso besteht der vordere Abschnitt 10 aus zwei Hälften oder Halbschalen, die durch eine Schraube 32 zusammengehalten werden.

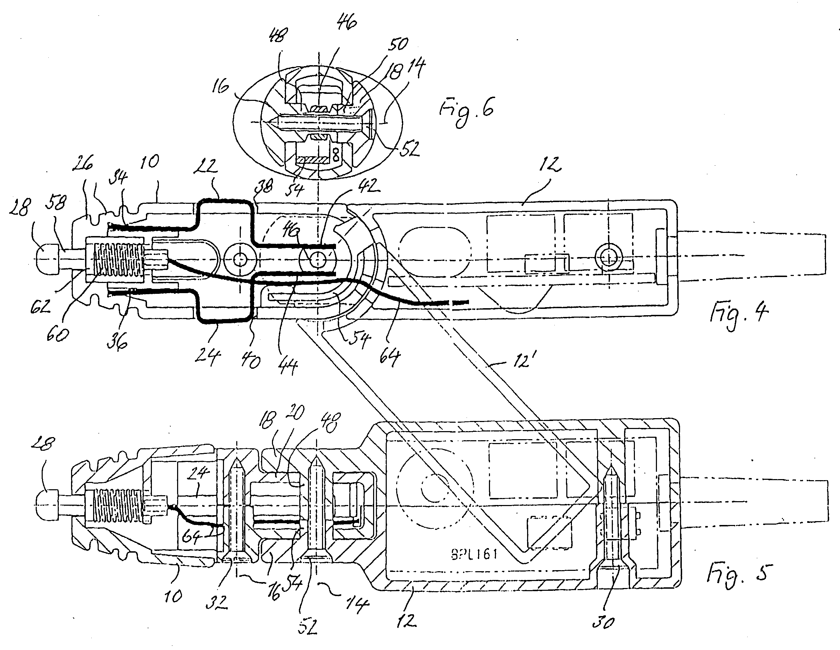

Nunmehr soll der erfindungsgemäße Stecker anhand der Schrittdarstellungen der Figuren 4,5 und 6 naher erläutert werden.

Aus Fig. 4 ist ersichtlich, daß die Klemmbacken 22,24 an ihren vorderen Enden 34,36 innerhalb des vorderen Endbereichs des vorderen Abschnitts 10 befestigt sind. Sie werden gebildet durch Blechstreifen, die In ihrem Mittelabschnitt nach außen so abgekröpft sind, daß sie durch Fenster 38,40 auf gegenüberliegenden Seiten des vorderen Abschnitts 10 austreten können. Mit ihren hinteren Enden 42,44 liegen die Blechstreifen am gegenüberliegenden Seiten gegen einen Spreiznocken 46 an, der fest mit dem hinteren Abschnitt 12 verbunden ist und konzentrisch zu dessen Schwenkachse liegt. Auf diese Weise wird der Spreiznocken 46 bei Schwenkung des hinteren Abschnitts 12 gedreht.

Wie insbesondere in Fig. 6 gezeigt ist, die einen Querschnitt durch den Bereich der Schwenkachse 14 darstellt, sind an den beiden Zungen jeweils einander zugewandte, hohle Zapfen 48,50 ausgebildet, von denen der von der Zunge 16 ausgehende Zapfen 48 länger als der andere Zapfen 50 ist und sich somit über die Teilungslinie zwischen den beiden Halbschalen des hinteren Abschnitts 12 hinaus erstreckt. Auf dieser über die Teilungslinie hinausgehenden Verlängerung befindet sich der Spreiznocken 46. Die beiden Zapfen 48,50 werden durch eine Schraube 52, die in der Schwenkachse 14 liegt, zusammengezogen. In Fig. 5 sind die Zapfen 48,50 ebenfalls dargestellt, jedoch ist der Spreiznocken 46 zur Vereinfachung fortgelassen. Fig. 5 und 6 lassen im übrigen auch erkennen, daß der hintere Endbereich 20 des vorderen Abschnitts 10 des Steckers von beiden Seiten her eingezogen ist. Wie bereits erwähnt wurde, liegen die hinteren Enden 42,44 der Klemmbacken 22,24 gegen den Spreiznocken 46 an.

In den rückwärtigen Endbereich 20 des vorderen Abschnitts 10 ist eine bogenförmige Feder 54 eingefügt, die von hinten um die Schwenkachse 14 herumläuft und am oberen Ende einen Rastnocken 56 aufweist. Aufgrund der Gestaltung der Feder 54, deren unteres, vorderes Ende fest eingespannt ist, wird der Raztnocken 46 nach außen, d. h. nach rechts oben In Fig. 5 vorgespannt. Wenn daher der hintere Abschnitt 12 in der in Fig. 5 zusätzlich dargestellten, abgeknickten Stellung steht, springt der Rastnocken 56 nach außen. Dadurch greift der Rastnocken hinter das Ende des hinteren Abschnitts 12, so daß die beiden Abschnitte 10,12 des Steckers in der abgeknickten Stellung verriegelt sind. Wenn der hintere Abschnitt 12 wieder angehoben werden soll, kann der Rastnocken 56 durch Fingerdruck eingedrückt werden.

Fig. 5 und 6 zeigen im übrigen genauer die Konstruktion des vorderen Plus-Pols 28. Der Plus-Pol weist einen nicht im einzelnen bezeichneten Kopf auf, der auf einem in Längsrichtung verschiebbaren Schaft 58 angebracht ist. Der Plus-Pol kann gegen den Druck einer Druckfeder 60 in den Stecker hinein, also nach rechts in Fig. 5 und 6 verschoben werden. Die Druckfeder 60 liegt gegen einen auf dem Schaft 58 befindlichen Kragen 62 an, der gegen die Druckfeder anliegt. Aus Fig. 5 und 6 ist im übrigen ersichtlich, daß von dem Plus-Pol 28 eine Leitung nach hinten In den Stecker hineinläuft. Weitere Einzelheiten der Verdrahtung sind nicht dargestellt da Insoweit keine Besonderheiten bestehen. Dies gilt auch für die lediglich strich-punktiert im hinteren Abschnitt angedeuteten Elemente der Elektronik.

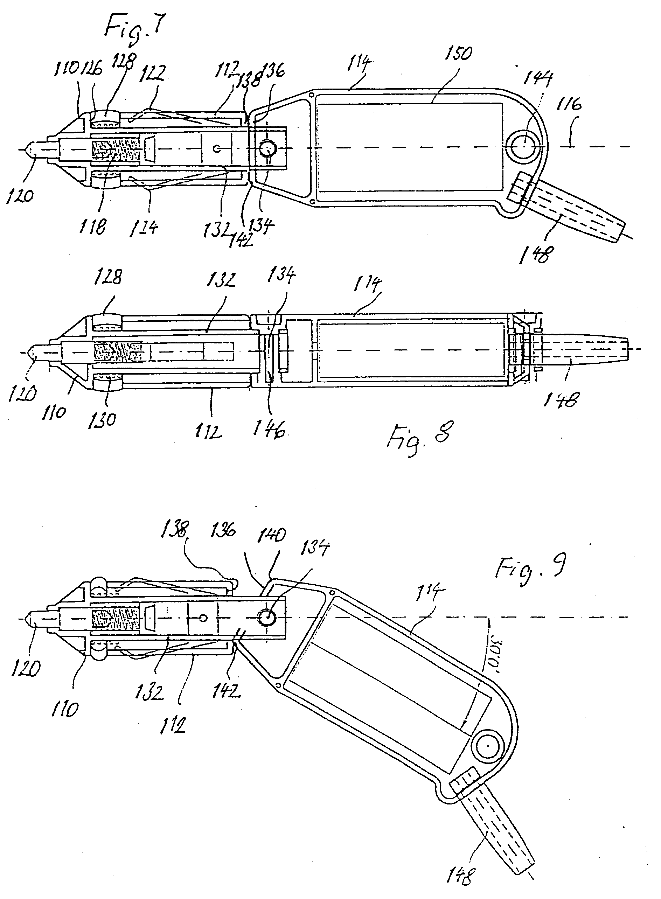

Anschließend werden die wesentlichen Merkmale eines erfindungsgemäßen Zigarettenanzünder-Steckers gemäß einer weiteren Ausführungsform anhand von Fig. 7 und 8 erläutert. Der Stecker setzt sich insgesamt zusammen aus einem vorderen Steckerabschnitt 110, einem hinteren Steckerabschnitt 112 und einem an den hinteren Steckerabschnitt anschließenden Handgriffteil 114. Die Begriffe "vorne" und "hinten" beziehen sich im vorliegenden Zusammenhang auf die Einschubrichtung des Steckers in eine nicht dargestellte Buchse. In allen Figuren der Zeichnung liegt das vordere Ende des Steckers nach dieser Definition links. Aus dem durch eine Längsachse 116 des Steckers bestimmten vorderen Zentrum des vorderen Steckerteils tritt ein durch eine Feder 118 vorgespannter. stiftförmiger Kontakt 120 auf, der in der an sich üblichen Weise den Plus-Pol des Steckers bildet. In Fig. 7 sind im übrigen auf der oberen und unteren Seite Kontaktzungen 122,124 angedeutet, die aus nicht im einzelnen dargestellten Schlitzen in dem hinteren Steckerteil 112 austreten und den Minus-Pol des Steckers bilden.

Die beiden Steckerabschnitte 110 und 112 bilden einen Zwischenraum 126, in dem sich ein Ring 128 befindet, der aus weichelastischem Material, also etwa Gummi oder einem geeigneten Kunststoff besteht. Im übrigen befindet sich innerhalb des Ringes 128 in dem Zwischenraum 126 eine Schrauben-Druckfeder 30, die bestrebt ist, die beiden Steckerabschnitte 110,112 auseinander zu drücken.

Von der Rückseite des vorderen Steckerabschnitts 110 geht ein zu diesem koaxialer Schaft 132 mit verringertem Durchmesser aus, der sich durch den gesamten hinteren Steckerabschnitt 112 erstreckt und an der Rückseite aus diesem austritt. An diesem nach hinten austretenden Ende befindet sich eine quer zur Längsrichtung des Steckers gerichtete Achse 134, in der das Handgriffteil 114 schwenkbar an dem Schaft angebracht ist. In der in Fig. 7 und 8 gezeigten Grundstellung liegt das Handgriffteil 114 mit einer vorderen Stirnwand 136 flächig gegen eine das hintere Steckerteil 112 nach hinten abschließende Wand 138 an.

Wenn nunmehr das Handgriffteil 114 aus der in Fig. 7 gezeigten Stellung nach unten oder auch oben geschwenkt wird, so bilden die beiden Ecken 140,142 der Stirnwand 136 des Handgriffteils Nockenflächen, die sich auf der hinteren Wand 138 des hinteren Steckerabschnitts abstützen. Das bedeutet, daß der Schaft 132 und mit diesem der vordere Steckerabschnitt 110 nach rückwärts, also nach rechts in Fig. 7 bis 9 gezogen wird. Diese Situation ist in Fig. 9 erkennbar, die im übrigen Fig. 7 entspricht. Es ist ersichtlich, daß durch axiales Zusammenspannen der beiden Steckerabschnitte 110,112 der weichelastische Ring 128 axial zusammengequetscht und dabei teilweise aus dem Zwischenraum 126 herausgedrückt wird. Auf diese Weise wird der Stecker in der Buchse des Zigarettenanzünders verspannt und damit festgelegt.

Das schwenkbare Handgriffteil 114 hat somit einerseits die Funktion, den Stecker in der Buchse zu verspannen. Daneben bietet die Schwenkbarkeit den erheblichen Vorteil, daß das Handgriffteil 114 aus Bereichen fortgeschwenkt werden kann, die für die Bedienung des zugehörigen Fahrzeugs freigehalten werden müssen, etwa aus dem Bereich des Schalthebels des Fahrzeugs.

Ergänzend soll noch erwähnt werden, daß in Fig. 7 bis 9 zwei Schrauben 144,146 gezeigt sind, die das aus zwei Hälften bestehende Gehäuse des Handgriffteils 114 zusammenhalten. Von diesen Schrauben liegt die Schraube 146 innerhalb der Achse 134, die den Schaft 132 und das Handgriffteil 114 verbindet. Im übrigen ist am rückwärtigen Ende des Handgriffteils 114 eine Kabeltülle 148 gezeigt, durch die die im einzelnen nicht dargestellten Anschlußkabel des Steckers herausgeführt werden können. Elektronische Steuer- und Schaltelemente sind innerhalb des Handgriffteils lediglich durch elnen Kasten 150 angedeutet.

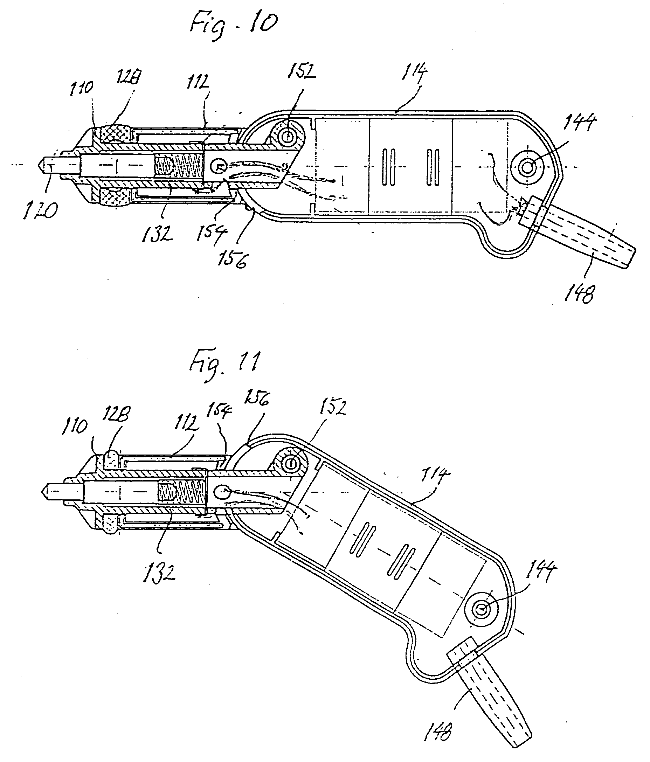

Fig. 10 und 11 zeigen eine Ausführungsform, die weitgehend der bereits beschriebenen Ausführungsform der Fig. 7 bis 9 entspricht, bei der jedoch die Schwenk- und Spannmechanik teilweise anders gelöst ist. Entsprechende. bereits behandelte Teile werden mit den bereits verwendeten Bezugsziffern versehen.

Gemäß Fig. 10 und 11 liegt die in diesem Falle mit 152 bezeichnete Achse, die das rückwärtige Ende des Schafts 132 mit dem Handgriffteil 114 verbindet, nicht in der Längsmittellinie 116 des Steckers, sondern in einer in Fig. 10 und 11 nach oben versetzten Position. Das hintere Steckerteil 112 weist an seinem rückwärtigen Ende eine konkav gewölbte Wand 154 auf, und die vordere Stirnwand des Handgriffteils 114 ist in gleicher Weise bogenförmigkonvex gewölbt. Auch In diesem Falle bildet die vordere Stirnwand 156 des Handgriffteils 114 eine Nockenfläche, mit der der Schaft 32 des vorderen Steckerabschnitts 110 nach hinten gezogen werden kann. Dies beruht darauf, wie aus Fig. 10 und 11 ohne weiteres ersichtlich ist, daß der Abstand zwischen der Achse 152 und der jeweils in Eingriff befindlichen Position der Stirnwand 156 mit der Schwenkung zunimmt. In der Wirkung unterscheidet sich diese Ausführungsform von der ersten Ausführungsform insoweit, als das Spannen des Steckers bei der zweiten Ausführungsform gleichmäßig verteilt während der gesamten Schwenkbewegung erfolgt.

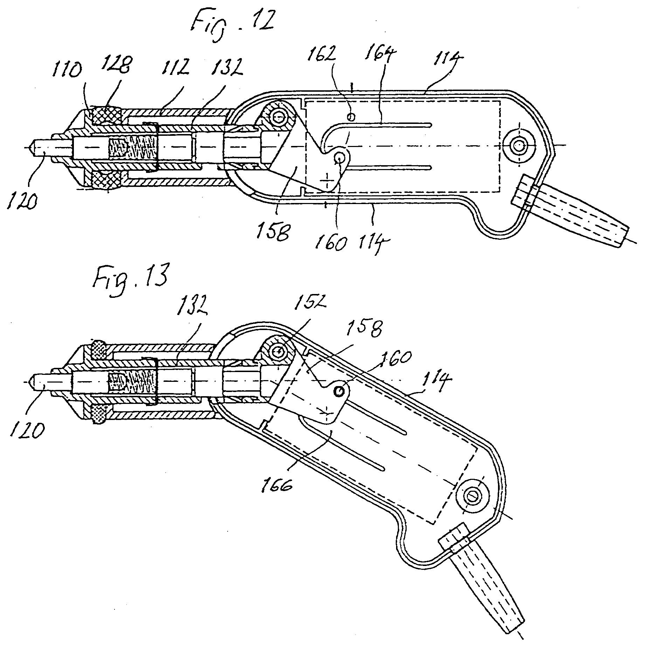

Gemäß Fig. 12 und 13 ist der Stecker der Fig. 10 und 11 mit einer Rasteinrichtung zur Festlegung in der abgeknickten Stellung versehen. Zu diesem Zweck befindet sich am rückwärtigen Ende des Schafts 132 ein Ansatz 158, der in das Innere des Handgriffteils 114 hinein vorspringt. Im äußeren Endbereich dieses Ansatzes 158 befindet sich eine senkrecht zur Zeichenebene in Fig. 12 und 13 gerichtete Rastbohrung 160, in die in der in Fig. 13 dargestellten abgeknickten Stellung des Steckers ein Raststift 162 einrastet, der sich an der in Fig. 12 von Innen sichtbaren Wand des Handgriffteils 114 befindet. In dieser Wand befindet sich im übrigen ein U-förmiger Schlitz 164, durch den in der Wand des Handgriffteils 14 eine federnde Zunge gebildet wird, die durch den Benutzer des Steckers von außen in das Innere des Handgriffteils 114 gedrückt werden kann. Diese federnde Zunge 166 kann in der verrasteten Stellung gemäß Fig. 13 gegen den Ansatz 58 gedrückt werden und damit den Ansatz 158 von dem Raststift 162 lösen, wenn der Stecker In die gerade Stellung gemäß Fig. 12 zurückgeführt werden soll.

## Patentansprüche

1. Zigarettenanzünder-Stecker, bestehend aus zwei schwenkbar miteinander verbundenen Abschnitten (10,12), mit einer Spreizeinrichtung (22,24) zur Sicherung des Steckers in der Buchse eines Zigarettenanzünders, dadurch **gekennzeichnet**, daß an der Achse des hinteren Abschnitts (12) innerhalb des vorderen Abschnitts (10) ein mit der Schwenkung des hinteren Abschnitts (12) drehbarer Spreiznocken (46) angebracht ist, gegen den zwei spreizbare Klemmbacken (22,24) von gegenüberliegenden Seiten anliegen.

2. Zigarettenanzünder-Stecker nach Anspruch 1, dadurch **gekennzeichnet**, daß die beiden Abschnitte (10,12) des Steckers im wesentlichen zylindrische Gehäuse aufweisen und daß einer der Abschnitte (12) an seinem dem anderen Abschnitt (10) zugewandten Ende an gegenüberliegenden Randbereichen zwei vorspringende, parallele Zungen (16,18) aufweist, die einen Endbereich (20) des anderen Abschnitts (10) von beiden Seiten her übergreifen, und daß sich die Schwenkachse (14) der beiden Abschnitte (10,12) durch die beiden Zungen (16,18) und den Endbereich (20) erstreckt.

3. Zigarettenanzünder-Stecker nach einem der Ansprüche 1, dadurch **gekennzeichnet**, daß die Abschnitte (10,12) an ihren einander zugewandten Enden jeweils auf einer Seite ausgespart sind und so unter Verbindung durch die Schwenkachse gegeneinander gelegt sind, daß die beiden Abschnitte (10,12) in der gestreckten Stellung miteinander fluchten.

4. Zigarettenanzünder-Stecker nach einem der Ansprüche 1 bis 3, dadurch **gekennzeichnet**, daß der hintere Abschnitt (12) in seinem hinteren Teil quer zur Schwenkrichtung im Querschnitt elliptisch verbreitert ist.

5. Zigarettenanzünder-Stecker nach Anspruch 2 oder 4, dadurch **gekennzeichnet**, daß der hintere, von den Zungen (16,18) übergriffene Endbereich (20) des vorderen Abschnitts (10) in Richtung der Schwenkachse eine verringerte Breite aufweist.

6. Zigarettenanzünder-Stecker nach einem der vorhergehenden Ansprüche, dadurch **gekennzeichnet**, daß die Klemmbacken (22,24) durch steife Blechstreifen gebildet werden, die mit abgekröpften Mittelabschnitten aus gegen-überliegenden Fenstern (38,40) des vorderen Stecker-Abschnitts (10) austreten.

7. Zigarettenanzünder-Stecker nach Anspruch 6, dadurch **gekennzeichnet**, daß die Blechstreifen an ihren vorderen Enden fest eingespannt sind und an ihren hinteren Enden gegen den Spreiznocken (46) anliegen.

8. Zigarettenanzünder-Stecker nach einem der vorhergehenden Ansprüche, dadurch **gekennzeichnet**, daß die beiden Abschnitte (10,12) des Steckers in der abgeknickten Stellung gegeneinander verrastbar sind.

9. Zigarettenanzünder-Stecker nach Anspruch 8, dadurch **gekennzeichnet**, daß im hinteren Endbereich (20) des vorderen Abschnitts (10) ein federnd nach außen vorgespannter Rastnocken (56) vorgesehen ist, der beim Abknicken des hinteren Abschnitts (12) gegenüber dem vorderen Abschnitt nach außen vorspringt und den abgeknickten hinteren Abschnitt hintergreift.

10. Zigarettenanzünder-Stecker` bestehend aus zwei schwenkbar miteinander verbundenen Abschnitten, mit einer Spreizeinrichtung zur Sicherung des Steckers in der Buchse eines Zigarettenanzünders, dadurch **gekennzeichnet**, daß der Stecker zwei hintereinanderliegende, einen Zwischenraum (126) bildende, in Axialrichtung relativ zueinander bewegliche Steckerabschnitte (110,112) umfaßt und daß ein Ring (128) aus elastischem Material in dem Zwischenraum zwischen den Steckerabschnitten (110,112) angeordnet ist, der durch axiales Zusammenspannen der Steckerabschnitte (110,112) radial spreizbar ist.

11. Zigarettenanzünder-Stecker nach Anspruch 10, dadurch **gekennzeichnet**, daß der Ring (128) aus Gummi oder Kunststoff besteht.

12. Zigarettenanzünder-Stecker nach Anspruch 10 oder 11, dadurch **gekennzeichnet**, daß der vordere Steckerabschnitt (110) auf seiner Rückseite in einen koaxialen Schaft (132) verringerten Durchmesser übergeht, der sich nach rückwärts durch den hinteren Steckerabschnitt (112) erstreckt.

13. Zigarettenanzünder-Stecker nach Anspruch 12, dadurch **gekennzeichnet**, daß mit dem rückwärtigen Ende des Schafts (132) ein schwenkbarer Spannhebel (114) verbunden Ist, der sich am rückwärtigen Ende des hinteren Steckerabschnitts (112) zum axialen Zusammenspannen der Steckerabschnitte (110,112) abstützt.

14. Zigarettenanzünder-Stecker nach Anspruch 13, dadurch **gekennzeichnet**, daß der Spannhebel die Form eines die Steckerabschnitte nach rückwärts verlängernden Handgriffteils (114) aufweist, das schwenkbar am rückwärtigen Ende des Schafts (132) angebracht ist und eine Nockenfläche (136,140,142,156) aufweist, die sich am hinteren Steckerabschnitt (112) abstützt.

15. Zigarettenanzünder-Stecker nach Anspruch 12, dadurch **gekennzeichnet**, daß mit dem hinteren Steckerabschnitt (112) ein Spannhebel verbunden ist, der sich im rückwärtigen Endbereich des Schaftes (132) zum axialen Zusammenspannen der Steckerabschnitte abstützt.

16. Zigarettenanzünder-Stecker nach Anspruch 15, dadurch **gekennzeichnet**, daß der Spannhebel die Form eines die Steckerabschnitte (110,112) nach rückwärts verlängernden Handgriffteils (114) aufweist, das schwenkbar am rückwärtigen Ende des hinteren Steckerteils angebracht ist und eine Nockenfläche aufweist, die den rückwärtigen Endbereich des Schafts erfaßt.

17. Zigarettenanzünder-Stecker nach Anspruch 14, dadurch **gekennzeichnet**, daß die das rückwärtige Ende des Schafts (132) und das Handgriffteil (114) verbindende Achse (134) in einer Längsmittelebene des Steckers liegt und daß das Handgriffteil (114) eine in bezug auf die Achse (134) exzentrische Nockenfläche aufweist.

18. Zigarettenanzünder-Stecker nach Anspruch 14, dadurch **gekennzeichnet**, daß die den rückwärtigen Endbereich des Schafts (132) und das Handgriffteil (114) verbindende Achse (152) parallel und im Abstand zu einer Längsmittelebene des Steckers liegt und daß das Handgriffteil (114) eine zu dieser Längsmittelebene symmetrische, kreisbogenförmige Nockenfläche (156) aufweist.

19. Zigarettenanzünder-Stecker nach einem der vorhergehenden Ansprüche, dadurch **gekennzeichnet**, daß am rückwärtigen Ende des Schafts (132) ein Ansatz (158) vorgesehen ist, der in das Innere des Handgriffteils (114) hineingreift, daß sich an dem Ansatz ein gegen die Wand des Handgriffteils (114) gerichteter Raststift (162) befindet, der in der abgeknickten Stellung des Steckers in einer Rastbohrung (160) in der Wand des Handgriffteils einrastet, und daß in dieser Wand des Handgriffteils (114) eine federnde Zunge (166) ausgebildet ist, die in das Innere des Handgriffteils (114) derart hineingedrückt werden kann, daß der Raststift (162) aus der Rastbohrung (160) ausgehoben wird.
